# EUROPEAN PATENT APPLICATION

(11) **EP 2 762 890 A1**
(43) Date of publication of application: **06.08.2014**
(21) Application number: 12836783.6
(22) Date of filing: 04.06.2012
(51) Int. Cl.: G01N 35/02, G01N 21/03

(54) **CELL SERIES STRUCTURE FOR ANALYSIS DEVICE**

(30) Priority: 30.09.2011 JP 2011216281
(71) Applicant: Hitachi High-Technologies Corporation, Tokyo 105-8717 (JP)
(72) Inventor: KONO Tsutomu, Yokohama-shi Kanagawa 244-0817 (JP); KAWAHARA Tetsuji, Hitachinaka-shi Ibaraki 312-8504 (JP); KOMORI Norihisa, Hitachinaka-shi Ibaraki 312-0033 (JP)
(74) Representative: Calderbank, Thomas Roger
(86) International application number: PCT/JP2012/064356
(87) International publication number: WO 2013/046806

(57) **Abstract**

To reduce the amount of warping deformation of a reaction cell block for an analysis device in which reaction cells and a holder are formed integrally in a complex shape with a resin material. At least one rib is provided on the front surface or the rear surface of one or both of a reaction cell arrangement face 4 or a coupling face 5 of a reaction cell block 18, the coupling face 5 being adapted to join the reaction cell arrangement face 4 and a flange face for attachment to an analysis device, whereby rigidity is increased.

## Description

### Technical Field

The present invention relates to reaction cells, to which a sample and a reagent are injected, for use in an automatic analysis device, and relates to a reaction cell block that is integrally molded through an injection molding process using a resin material.

### Background Art

In the clinical examination conducted for medical diagnoses, a biochemical analysis or an immunological analysis of proteins in a biological sample, such as blood or urine, sugars, lipids, enzymes, hormones, inorganic ions, disease markers, and the like are conducted. In the clinical examination, a plurality of testing items should be processed at high speed with high reliability. Thus, a greater part of the examination is executed with an automatic analysis device. A conventionally known automatic analysis device is, for example, a device that performs a biochemical analysis of a reaction solution, which has been obtained by mixing and reacting a sample such as blood serum with a desired reagent, by measuring the absorbance thereof. This type of biochemical analysis device has a mechanism for automatically injecting a sample and a reagent into a reaction cell, an automatic agitation mechanism for mixing the sample and the reagent in the reaction cell, a mechanism for measuring the optical spectrum of the sample that is being reacting or has reacted, an automatic washing mechanism for suctioning and discharging a reaction solution for which the optical spectrum measurement has finished, and then washing the reaction cell, and the like, and thus uses containers for storing the sample and the reagent, and reaction cells to which the sample and the reagent are injected (for example, Patent Literature 1).

In the field of automatic analysis devices, reductions in the amounts of a sample and a reagent are significant technical challenges to be addressed. That is, there have been cases where, with an increase in the number of items to be analyzed, the amount of a sample that can be used for an analysis of a single item has decreased, or a sample itself is valuable and thus is difficult to be prepared in large quantities. Thus, an analysis of a minute amount of a sample, which has been conventionally a high-level analysis, has come to be performed routinely. In addition, as the level of the content to be analyzed increases, the cost of a reagent would typically increase correspondingly, and thus, there is also a demand for a reduction in the amount of a reagent from a cost perspective. Such reductions in the amounts of a sample and a reagent can lead to a strong motivation to promote a reduction in the size of the reaction cells. Further, reducing the size of the reaction cells as well as reducing the amounts of a sample and a reagent that are necessary is advantageous in that it leads to an improvement in the throughput of the analysis and a reduction in the amount of a waste liquid to be produced (for example, Patent Literature 4).

Herein, reaction cells (which are also referred to as reaction containers) used for a typical automatic analysis device are usually formed of glass, synthetic resin, or the like. For example, according to Patent Literature 2, as a material of the reaction cells, a resin material with low water absorption, low moisture permeability, high total light transmittance, a low refractive index, and a low molding shrinkage factor is selected. Specifically, one resin material selected from polycycloolefin, polycarbonate resin, acrylic resin, or polystyrene resin is often used. Patent Literature 3 discloses a method of modifying the surface of a plastic container to suppress adsorption of a minute amount of analyte onto the surface of the plastic. Patent Literature 4 discloses a method of locally converting a photometric surface of a plastic reaction cell into a hydrophilic surface through corona discharge treatment so as to prevent adhesion of air bubbles or mutual contamination between cells due to non-contact agitation that is performed using acoustic waves.

It should be noted that the reaction cells shown in Patent Literature 1 to 4 each have a structure in which a plurality of reaction cells made of resin are individually produced, and then, the reaction cells are stored in a holder.

### Citation List

### Patent Literature

Patent Literature 1: JP 1706358 B
Patent Literature 2: JP 2005-30763 A
Patent Literature 3: JP 2000-346765 A
Patent Literature 4: JP 2007-183240 A

### Summary of Invention

### Technical Problem

In the field of automatic analysis devices, there has been a tendency that reductions in the amounts of a sample and a reagent have further advanced, and there has also been an increasing demand for reductions in the size and cost of the device. In order to reduce the assembly cost to cope with such demand for cost reduction, it is conceivable to adopt a reaction cell block in which reaction cells and a holder are integrally formed through an injection molding process using a resin material. The reaction cell block includes a plurality of reaction cells, a reaction cell arrangement face provided by coupling the plurality of reaction cells together, a flange face for attachment to an analysis device, and a coupling face that joins the cell arrangement face and the flange face, and is formed through an injection molding process.

However, when a reaction cell block with such a complex shape is formed through an injection molding process, a problem would arise that the amount of shrinkage of resin in a molten state that fills a die, which occurs until solidification starts, would differ from place to place, resulting in increased warping deformation, and thus, the dimensional accuracy would decrease.

When warping deformation is generated in the reaction cell block, there is a possibility that the reaction cells of the reaction cell block that is installed on an automatic analysis device may have dimensional variations that are beyond prescribed dimensions. Therefore, problems would arise that a measurement beam cannot pass through a reaction solution in reaction cells with dimensional variations that are beyond prescribed dimensions, and thus, measurement cannot be conducted, or measurement errors may occur.

### Solution to Problem

In order to reduce warping deformation, a method of providing a rib with a projecting shape on the surface of a reaction cell block would be effective to increase the rigidity of a resulting product and prevent deformation that would otherwise occur due to shrinkage of resin. However, when a rib is provided to improve the rigidity of the product, the shape of the reaction cell block becomes further complex. Thus, non-uniformity of shrinkage from place to place of the product becomes large, which can cause warping deformation. Therefore, since the non-uniformity of shrinkage from place to place of the product becomes larger than the effect of the rigidity improved with the provision of the rib, there may be cases where a sufficient warping deformation suppression effect cannot be obtained, or conversely, the amount of warping deformation may increase.

Accordingly, it is necessary to reduce the amount of warping deformation by optimizing the effect of increasing rigidity with the provision of a rib and the influence of non-uniformity of shrinkage from place to place of a product. At this time, if prototypes of products are formed through trial and error, the number of steps of processing and modifying a die will increase, and thus, a reduction in the cost of the device cannot be realized. Therefore, a method of optimizing the shape of a reaction cell block by using CAE (Computer Aided Engineering) would be effective.

A reaction cell block for an analysis device in accordance with the present invention includes a plurality of reaction cells each having a sealed portion at one end and an open portion at the other end; a reaction cell arrangement face obtained by arranging the plurality of reaction cells such that end faces of the reaction cells on the open portion side are flush; a flange face for attachment to the analysis device, and a coupling face that joins the reaction cell arrangement face and the flange face. The reaction cell arrangement face and the flange face form a stepped structure.

According to the present invention, at least one rib is provided on the front surface or the rear surface of the coupling face, in a direction in a range of ±10° with respect to a direction that is orthogonal to an outer circumferential end portion of the reaction cell arrangement face. The rib on the coupling face is preferably formed in a region from a boundary position between the flange face and the coupling face to a boundary position between the coupling face and the reaction cell arrangement face. In addition, three or more ribs are preferably provided for every 45° of the coupling face in the circumferential direction. The ratio of the thickness of the coupling face to the thickness of the rib is preferably 0.5 or more.

According to another embodiment of the present invention, a rib is provided on at least part of the front surface or the rear surface of the reaction cell arrangement face. Alternatively, at least one rib is provided on the front surface or the rear surface of the coupling face, and at least one rib is provided on the front surface or the rear surface of the reaction cell arrangement face.

The rib provided on the reaction cell arrangement face is provided on at least part of the front surface or the rear surface of an outermost circumferential end portion of the reaction cell arrangement face. Preferably, the rib is provided on the front surface or the rear surface of the entire outermost circumferential end portion of the reaction cell arrangement face.

The ratio of the thickness of the cell arrangement face to the thickness of the rib is preferably one or more.

The ratio H1/H2 between the depth dimension H1 of the cell and the dimension H2 of the coupling face that are measured in a direction orthogonal to the cell arrangement face is preferably 3.8 or less. In addition, the ratio L1/L2 between the dimension L1 of the reaction cell block in the entire radial direction and the dimension L2 of the coupling face in the radial direction that are measured in a direction parallel with the flange face is preferably 7.4 or less.

### Advantageous Effects of Invention

According to the present invention, a reaction cell block whose warping deformation is reduced through optimization of the shape of a rib can be obtained.

Other problems, structures, and advantageous effects will become apparent from the following description of embodiments.

### Brief Description of Drawings

Fig. 1A is a plan view showing an exemplary reaction cell block.
Fig. 1B is a cross-sectional view of Fig. 1A along A-A.
Fig. 1C is a cross-sectional view of Fig. 1A along B-B.
Fig. 2 is a schematic view of an injection molding process.
Fig. 3 is a view showing the dimensions of a reaction cell block.
Fig. 4 is a view showing the relationship between H1/H2 of a hollow reaction cell and the amount of warping deformation.
Fig. 5 is a perspective view showing warping deformation of sealed portions of reaction cells of a reaction cell block.
Fig. 6 is a view showing the relationship between L1/L2 of a reaction cell block and the amount of warping deformation.
Fig. 7 is a perspective view showing an embodiment in which three ribs are provided on a coupling face.
Fig. 8 is a view showing the relationship between the ratio of the thickness of the coupling face to the thickness of the rib and the amount of warping deformation.
Fig. 9A is a perspective view showing an embodiment in which a single rib is provided on a coupling face.
Fig. 9B is a perspective view showing an embodiment in which five ribs are provided on a coupling face.
Fig. 10 is a view showing the relationship between the number of ribs on a coupling face and the amount of warping deformation.
Fig. 11A is a perspective view showing an embodiment in which a rib is provided in the circumferential direction of a coupling face.
Fig. 11B is a cross-sectional view of Fig. 11A along A-A.
Fig. 12A is a perspective view showing an embodiment in which a rib is provided on a reaction cell arrangement face.
Fig. 12B is a cross-sectional view of Fig. 12A along A-A.
Fig. 13 is a view showing the relationship between the ratio of the thickness of the reaction cell arrangement face to the thickness of the rib and the amount of warping deformation.
Fig. 14A is a perspective view showing an embodiment in which ribs are provided on a coupling face and a reaction cell arrangement face.
Fig. 14B is a cross-sectional view of Fig. 14A along A-A.
Fig. 15 is a view showing the relationship between the ratio of the thickness of the reaction cell arrangement face to the thickness of the rib on the reaction cell arrangement face and the amount of warping deformation.
Fig. 16 is a view showing the configuration of an automatic analysis device.
Fig. 17 is a schematic view of a spectrophotometer.

### Description of Embodiments

Although the present invention will be described in more detail by way of embodiments, the present invention is not limited thereto.

An example will be described in which a reaction cell block, which has a plurality of reaction cells coupled together for storing a reaction solution that has been obtained by mixing and reacting a sample with a reagent, for use in an automatic analysis device is produced through injection molding using resin such as polycycloolefin as a material. For the material of the cells, any material selected from polycycloolefin resin, polycarbonate resin, acrylic resin, or polystyrene resin may be used. However, from the perspective of achieving low water absorption, low moisture permeability, high total light transmittance, a low refractive index, and a low molding shrinkage factor, polycycloolefin is desirably selected.

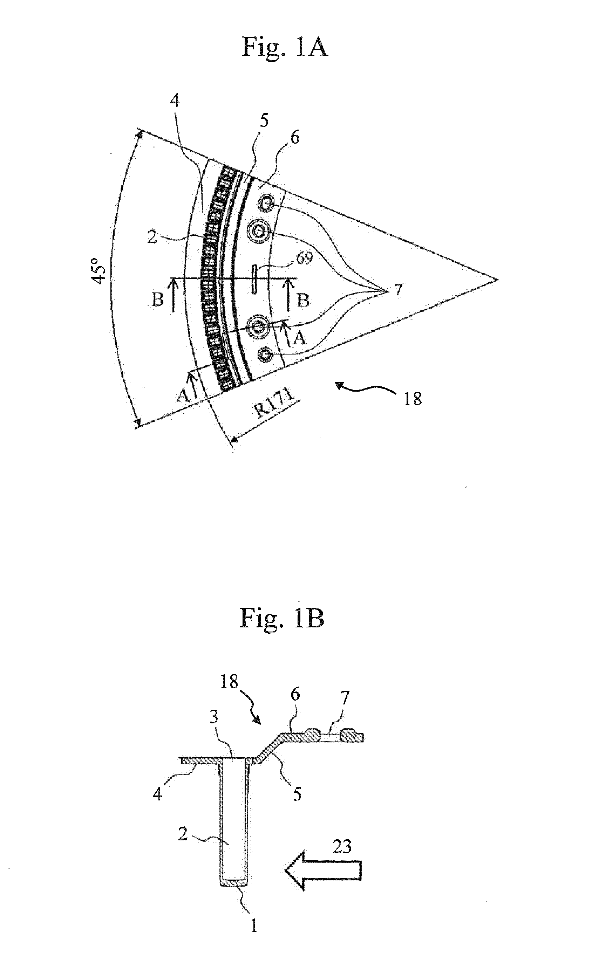

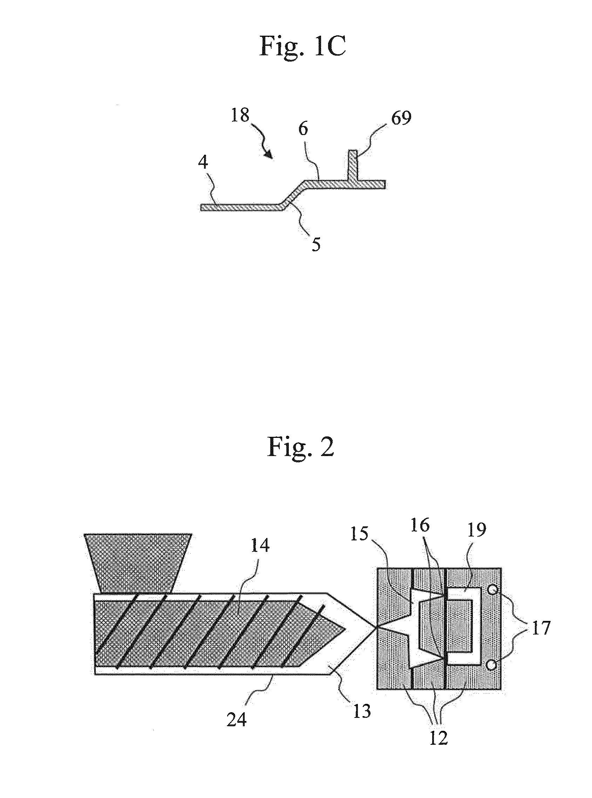

This embodiment will describe an example in which 20 hollow reaction cells 2 are integrally molded as a reaction cell block 18 through an injection molding process as shown in a plan view of Fig. 1A. However, the present invention is not limited to the reaction cell block 18 formed of 20 reaction cells 2, and can be applied to the reaction cell block 18 having two or more reaction cells 2. Herein, Fig. 1B is a cross-sectional view of Fig. 1A along A-A, and Fig. 1C is a cross-sectional view of Fig. 1A along B-B.

The reaction cell block 18 includes a plurality of reaction cells 2 each having a sealed portion 1 at one end and an open portion 3 at the other end, a reaction cell arrangement face 4 that is provided by arranging end faces of the plurality of reaction cells 2 on the open portion 3 side to be flush, a flange face 6 for attachment to an analysis device, and a coupling face 5 that joins the reaction cell arrangement face 4 and the flange face 6. The reaction cell arrangement face 4 and the flange face 6 form a stepped structure with different heights. The flange face 6 is provided with screw mounting holes 7 and a handle 69. The reaction cell block 18 in this embodiment that is exemplary shown herein has a shape of an arc with an angle of 45° in the circumferential direction, and a combination of 8 reaction cell blocks 18 in the circumferential direction is installed on an automatic analysis device. The thickness of the wall surface of each reaction cell 2 is 0.55 mm, the thickness of the cell arrangement face 4 is 1.5 mm, the thickness of the coupling face 5 is 1.55 mm, and the thickness of the flange face 6 is 2.0 mm.

Fig. 2 is a schematic view showing an injection molding process for producing the reaction cell block 18. An injection molding die 12 includes, in addition to a space portion 19 (i.e., the reaction cell block portion) of a product, a runner 15, which is a resin flow path leading to the space portion 19 of the product, a gate 16, which is a resin injection port leading to the space portion 19 of the product, a medium path 17 for flowing a cooling medium such as water or oil, and the like. The die 12, which has been processed with the shape of the reaction cell block 18 as the space 19, is filled with a resin material 13 melted in a cylinder 24 of an injection molding machine by a screw 14, and then the reaction cell block 18 cooled and solidified in the die 12 is taken out of the die 12, whereby the product (i.e., the structure of the reaction cell block 18) is produced.

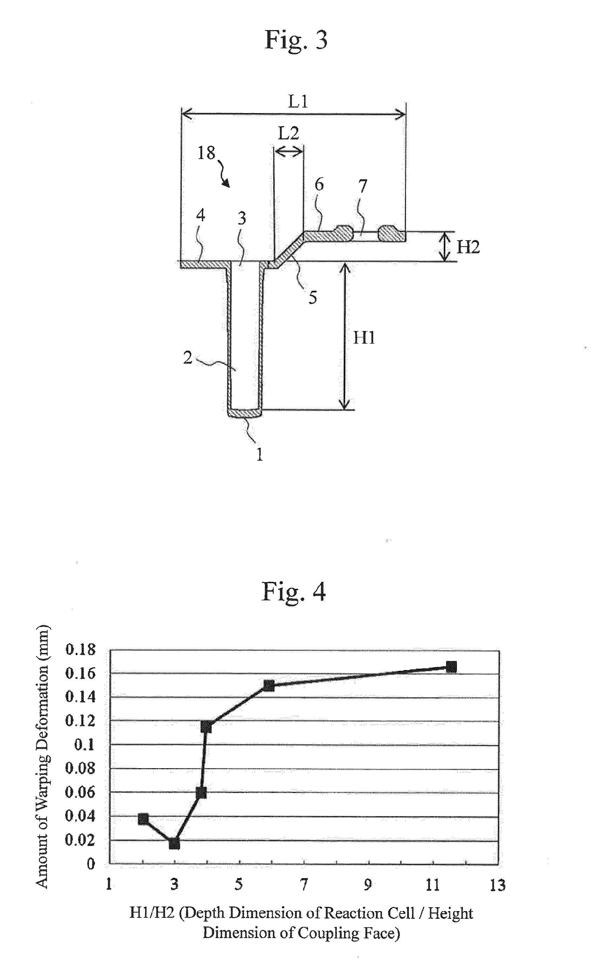

Herein, as shown in Fig. 3, the reaction cell block 18 shown in Fig. 1 was analyzed with the dimension (L2) of the coupling face 5 in the radial direction and the height (H2) of the coupling face 5 changed in various ways. The dimension (L1) in the entire radial direction was fixed to 46 mm, and the depth (H1) of the hollow reaction cell 2 was fixed to 30 mm. Table 1 shows the dimensions (units of mm) of L1, L2, H1, and H2 used for the analyses.

**[Table 1]**

| | 1 | 2 | 3 | 4 | 5 | 6 | 7 | 8 | 9 | 10 |
|---|---|---|---|---|---|---|---|---|---|---|
| L1 | 46 | 46 | 46 | 46 | 46 | 46 | 46 | 46 | 46 | 46 |
| L2 | 3.5 | 6.0 | 6.22 | 8.5 | 23 | 6.0 | 6.0 | 6.0 | 6.0 | 6.0 |
| L1/L2 | 13.14 | 7.67 | 7.40 | 5.41 | 2.00 | 7.67 | 7.67 | 7.67 | 7.67 | 7.67 |
| H1 | 30 | 30 | 30 | 30 | 30 | 30 | 30 | 30 | 30 | 30 |
| H2 | 7.6 | 7.6 | 7.6 | 7.6 | 7.6 | 2.6 | 5.1 | 7.9 | 10.1 | 15 |
| H1/H2 | 3.95 | 3.95 | 3.95 | 3.95 | 3.95 | 11.5 | 5.88 | 3.80 | 2.97 | 2.00 |

Herein, the amount of warping deformation after the molding was analyzed through a resin flux analysis. As the analysis software, MOLD FLOW of Autodesk, Inc. was used. For the resin material 13, polycarbonate resin was used, the resin flow rate was set to 18 cm³/s, the temperature of the die 12 was set to 95 °C, the resin temperature was set to 300 °C, the hold pressure was set to 40 MPa, the hold time was set to 15s, and the cooling time was set to 30s.

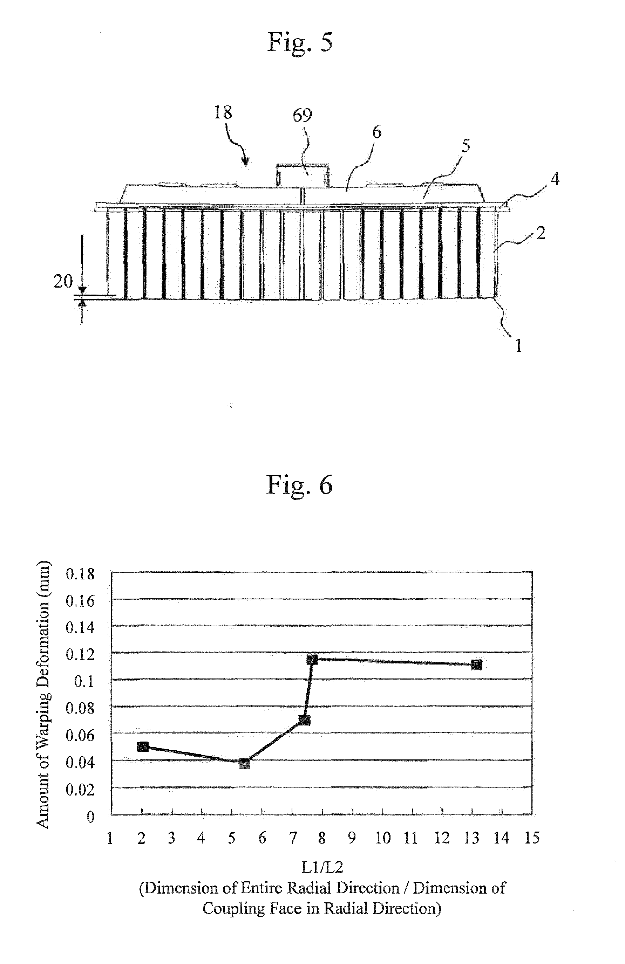

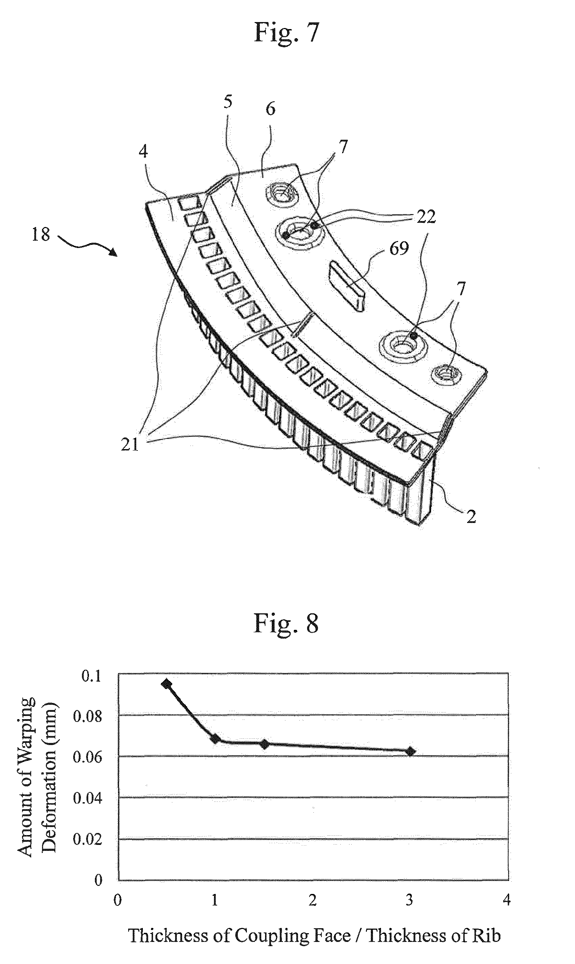

Fig. 4 shows the relationship between H1/H2 and the amount of warping deformation of the reaction cell block 18 shown in Fig. 1 when the dimensions H1 and H2 were changed in accordance with shapes 2 and 6 to 10 shown in Table 1. It should be noted that the reference plane used to evaluate the warping deformation is a plane including three points 22 of the screw mounting holes 7 on the flange face shown in Fig. 7, and the amount of warping deformation 20 that represents variations in height (the maximum value - the minimum value) of the sealed portions 1 of the reaction cells was evaluated for the 20 reaction cells 2 forming the reaction cell block 18 shown in Fig. 5. When warping deformation is generated in the reaction cell block 18, there is a possibility that the height dimensions of the cell sealed portions 1 of the reaction cell block 18, which is installed on an automatic analysis device, may have variations that are beyond a prescribed dimension. Therefore, since a measurement beam 23 shown in Fig. 1B cannot pass through a reaction solution in the reaction cells 2 with dimensional variations that are beyond a prescribed dimension, a problem may arise that an analysis cannot be performed or the accuracy of analysis would decrease.

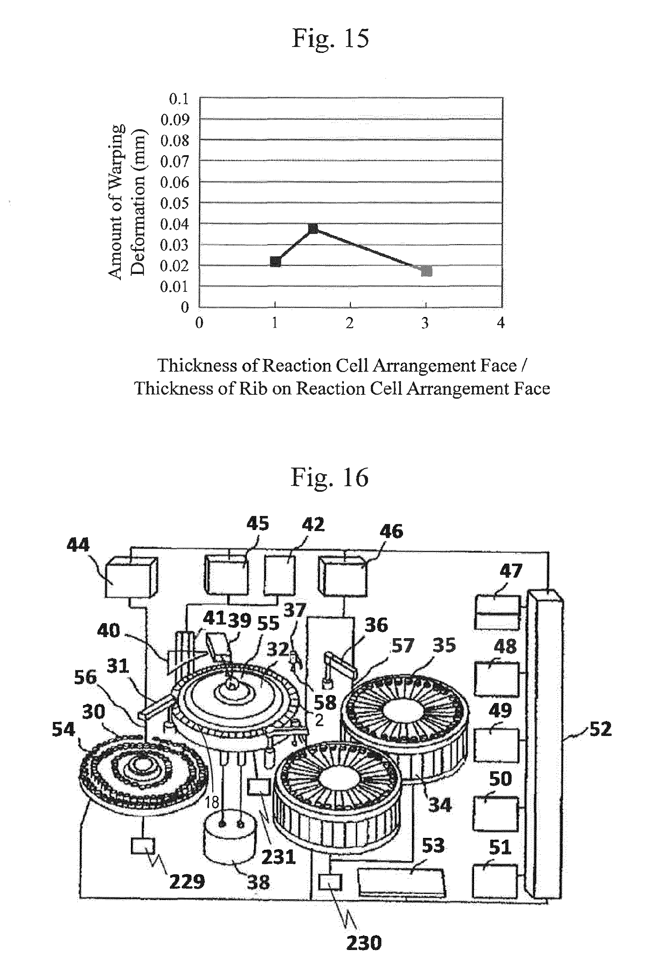

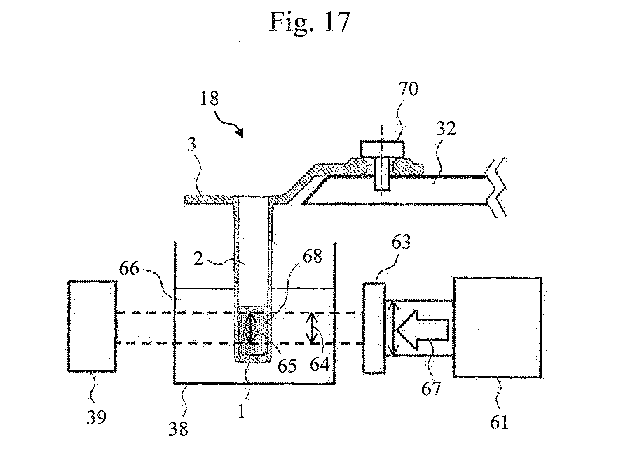

Herein, since a reaction disc 32 and the like on which the reaction cell blocks 18 are arranged as shown in Figs. 16 and 17 also have dimensional variations, the amount of warping deformation of each reaction cell block 18 should be less than or equal to 0.1 mm in view of the structure of the device in order to allow a measurement beam to pass through a reaction solution in the plurality of reaction cells 2 forming the reaction cell block 18 and prevent generation of measurement errors.

Herein, when the value of H1/H2 is small, the value of H2 is large and the height of the whole product is high. Thus, the effect of improving the rigidity of the product increases, and the amount of warping deformation can be reduced. That is, a tilt of the coupling face 5 becomes sharp, and the rigidity can be improved with the stepped structure of the cell arrangement face 4 and the flange face 6. However, when the value of H1/H2 is too small, the cell arrangement face 4 is influenced by the shrinkage in the height direction (i.e., the direction of H2) due to the shrinkage of the coupling face 5 with a large tilt, and thus, the shrinkage balance becomes bad.

Meanwhile, when the value of H1/H2 is large, the shrinkage balance improves. However, since a tilt of the cell arrangement face 4 becomes gentle and the height of the whole product becomes low, the rigidity of the product decreases. Therefore, the shrinkage of resin cannot be supported with the rigidity of the product, and there is an inflection point at which the amount of warping deformation becomes large (H1/H2 = 3.95).

As described above, in order to reduce the amount of warping deformation to less than or equal to 0.1 mm, it is desirable that 2 ≤ H1/H2 ≤ 3.8.

It should be noted that there may be cases where H1/H2 cannot be optimized due to restrictions on the device configuration. Described below is an examination conducted to see if the dimension accuracy of even a shape (H1/H2 = 3.95), which has a large amount of warping deformation due to restrictions on the dimensions of the reaction cell block 18, can be improved by suppressing the amount of warping deformation through optimization of the value of L1/L2 shown in Fig. 1.

Fig. 6 shows the relationship between L1/L2 and the amount of warping deformation of the reaction cell block 18 shown in Fig. 1 when the dimension of L2 is changed using shapes 1 to 5 shown in Table 1. The reference plane used to evaluate the warping deformation is a plane including three points 22 of the screw mounting holes 7 on the flange face shown in Fig. 7, and the amount of warping deformation 20 of the sealed portions 1 of the reaction cells shown in Fig. 5 was evaluated.

As shown in Fig. 6, when the value of L1/L2 is large, the tilt angle of the coupling face 5 increases due to the stepped structure, and thus, the rigidity of the product can be increased. However, since the shrinkage balance of when the resin material 13 shrinks becomes bad due to the increased tilt angle, the amount of warping deformation increases.

Herein, when a shape with small L1/L2 is used, the tilt of the coupling face 5 becomes gentle, and the rigidity of the product decreases. However, as the shapes of the cell arrangement face 4 and the flange face 6 become close to flat shapes, the shrinkage balance improves. Therefore, the amount of warping deformation can be reduced. Meanwhile, when a shape with large L1/L2 is used, the tilt of the coupling face 5 becomes sharp and the rigidity increases. However, since the cell arrangement face 4 is influenced by the shrinkage in the height direction (i.e., the direction of H2) due to the shrinkage of the coupling face 5 with a large tilt, the shrinkage balance becomes bad, and there is an inflection point at which the amount of warping deformation becomes large (L1/L2 = 7.67).

From the foregoing, in order to reduce the amount of warping deformation to less than or equal to 0.1 mm as described above in the reaction cell block 18 in which the cell arrangement face 4 and the flange face 6 form a stepped structure, it is desirable that 2 ≤ L1/L2 ≤ 7.4.

It should be noted that there may be cases where H1/H2 and L1/L2 cannot be optimized due to restrictions on the device configuration. Described below is an examination conducted to see if the dimension accuracy of even a shape, which has a large amount of warping deformation due to restrictions on the dimensions of the reaction cell block 18, can be improved by suppressing the amount of warping deformation by providing a rib(s) with a projection shape on the surface of the product.

In order to reduce the amount of warping deformation by improving the rigidity of the whole product, an examination was conducted by providing three ribs each with a height of 0.5 mm on the coupling face 5 with the shape 2 shown in Table 1 and changing the thickness of each rib. Fig. 7 is a perspective view showing an example of a reaction cell block used for the analysis in which ribs 21 are provided on the coupling face 5. One of the three ribs was formed at the center position of the coupling face 5 in the circumferential direction, and the two other ribs were formed at opposite ends of the coupling face 5 in the circumferential direction. Each rib was formed such that the major axis direction thereof coincides with the radial direction of the arcuate reaction cell block. Fig. 8 shows the relationship between the ratio of the thickness of the coupling face to the thickness of each rib and the amount of warping deformation.

As shown in Fig. 8, providing the ribs 21 on the coupling face 5 was able to reduce the amount of warping deformation. Herein, it was found that the smaller the value of "the ratio of the thickness of the coupling face to the thickness of each rib" (i.e., the greater the thickness of each rib), the greater the amount of warping deformation. When the value of "the ratio of the thickness of the coupling face to the thickness of each rib" is small (i.e., when the thickness of each rib is large), the rigidity of the product can be improved, but the thickness of the coupling face 5 on which the ribs are provided becomes locally large. Therefore, it is considered that the effect of an increase in warping deformation due to the locally increased thickness of the coupling face 5 has become greater than the effect of suppressing warping deformation with the increased rigidity of the product. It should be noted that in order to reduce the amount of warping deformation to less than or equal to 0.1 mm as described above, the ratio of the thickness of the coupling face to the thickness of each rib is desirably 0.5 or more.

Herein, an examination was conducted by changing the number of ribs 21. Specifically, an examination was conducted by comparing the amounts of warping deformation of shapes with one, three, and five ribs 21, where the height of each rib was set to 0.5 mm and the thickness of each rib was set to 1.0 mm.

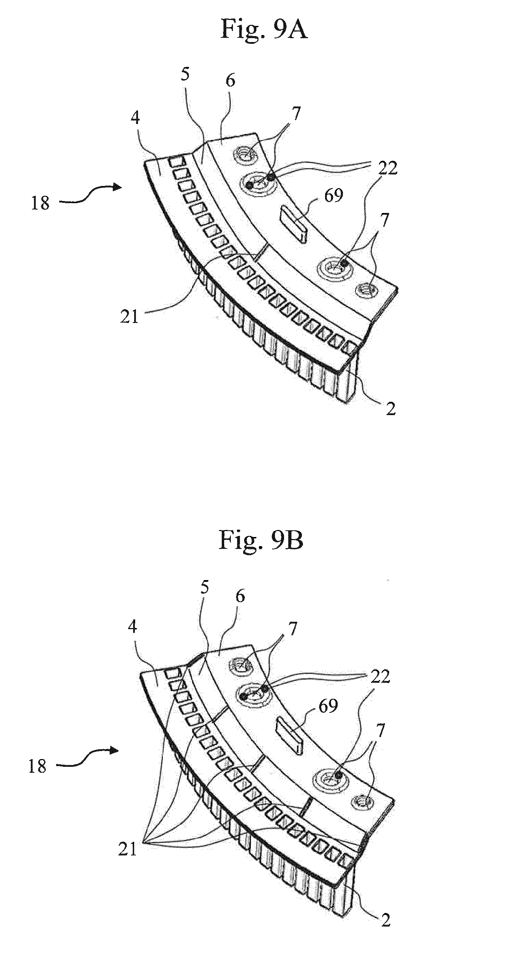

Figs. 9A and 9B each show the arrangement and the shapes of the provided ribs 21. Herein, Fig. 9A is a perspective view of an embodiment of a reaction cell block with a single rib provided thereon, and Fig. 9B is a perspective view of an embodiment of a reaction cell block with five ribs provided thereon. It should be noted that the arrangement and the shapes of ribs in the case where three ribs are provided are identical to those in Fig. 7. The major axis direction of each rib was made to coincide with the radial direction of the arcuate reaction cell block.

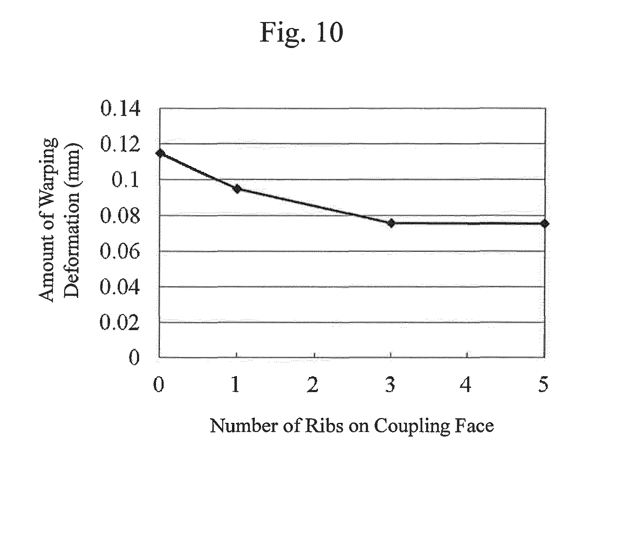

Fig. 10 shows the amounts of warping deformation for cases where the number of ribs is changed. As shown, when ribs are provided on the coupling face, it was found that, independently of the number of ribs provided, the amount of warping deformation was able to be reduced than when no rib was provided. Providing one or more ribs can reduce the amount of warping deformation to less than or equal to 0.1 mm, but providing three or more ribs has a bigger effect of reducing warping deformation. Thus, three or more ribs are desirably provided.

The aforementioned examinations show cases where, with regard to a single rib shown in Fig. 9A, the single rib is provided at the center of the coupling face 5 in the circumferential direction, and with regard to three or five ribs shown in Figs. 7 and 9, respectively, the ribs are provided at opposite ends of the coupling face 5 in the circumferential direction and an equidistant position(s) from the opposite ends. However, the present invention is not limited to such arrangement of ribs, and the effect of suppressing warping deformation with the increased rigidity can be obtained as long as the rib 21 is provided on at least part of the front surface or the rear surface of the coupling face 5. The rib provided on the coupling face has an effect of suppressing warping deformation with the increased rigidity even when part of the rib is disconnected. It should be noted that as shown in Figs. 7, 9A, and 9B, the rib(s) 21 on the coupling face 5 is/are desirably formed in a region across opposite ends of the coupling face in the radial direction, that is, in a region from the boundary position between the flange face 6 and the coupling face 5 to the boundary position between the coupling face 5 and the reaction cell arrangement face 4.

The rib(s) 21 provided on the coupling face 5 is/are desirably formed in a shape that is symmetrical with respect to the circumferential direction or the radial direction in order to improve the shrinkage balance, and the longitudinal direction of each ribs 21 is preferably set to coincide with the radial direction of the arcuate reaction cell block as shown in Figs. 7, 9A, and 9B, for example, and is desirably set in a direction in the range of ± 10° with respect to the direction that is orthogonal to the outer circumferential end portion of the reaction cell arrangement face 4.

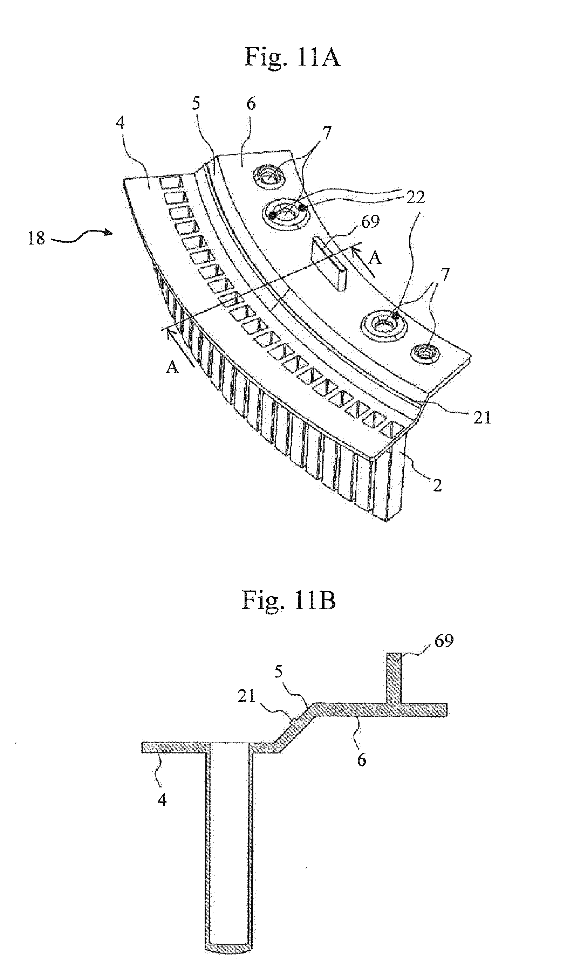

Hereinabove, examples have been described in which a rib(s) that radially extend(s) from the center of the arc of the arcuate reaction cell block is/are provided on the coupling face 5. However, the present invention is not limited thereto, and the rigidity can be improved even when a rib 21 that extends in the circumferential direction is provided on the coupling face 5 as shown in a perspective view of Fig. 11A and Fig. 11B that is a cross sectional view of Fig. 11A along A-A. The dimensions of the rib 21 provided in the circumferential direction shown in Figs. 11A and 11B are: a height of 0.5 mm and a thickness of 1 mm, and the amount of warping deformation in the case where such rib that extends in the circumferential direction is formed was 0.087 mm.

From the foregoing, it was found that the effect of suppressing warping deformation is obtained even when a rib that extends in the circumferential direction of the coupling face 5 is provided. However, it has been clarified that providing a rib(s) that extend(s) in the radial direction has a higher effect of suppressing warping deformation as shown in Fig. 10.

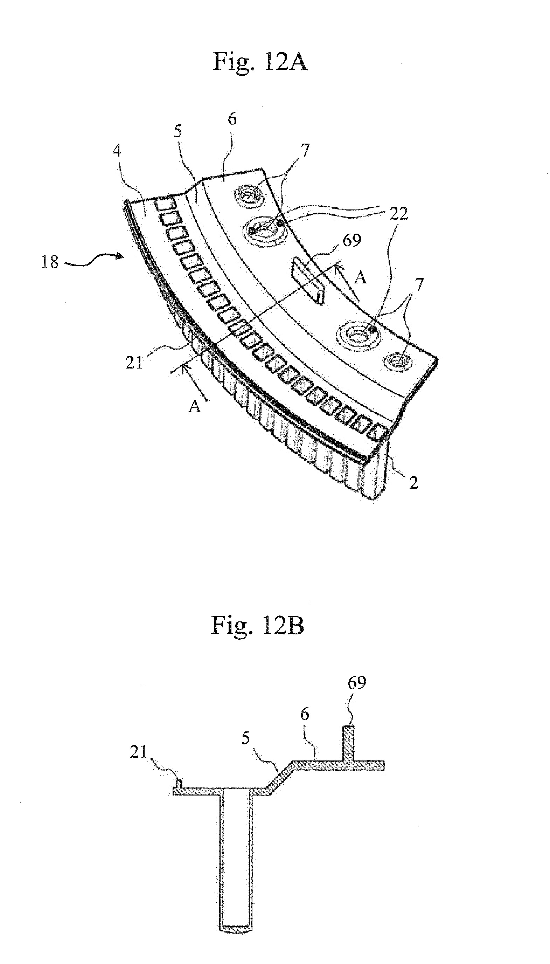

An examination was conducted by providing a rib 21 on the reaction cell arrangement face 4 with the shape 2 shown in Table 1. Fig. 12A is a perspective view showing a reaction cell block of this embodiment in which a rib is provided on the reaction cell arrangement face, and Fig. 12B is a cross-sectional view thereof along A-A. As shown, an examination was conducted by providing a rib 21 with a height of 0.5 mm along the surface of the outermost circumferential end portion of the reaction cell arrangement face 4, and changing the thickness of the rib.

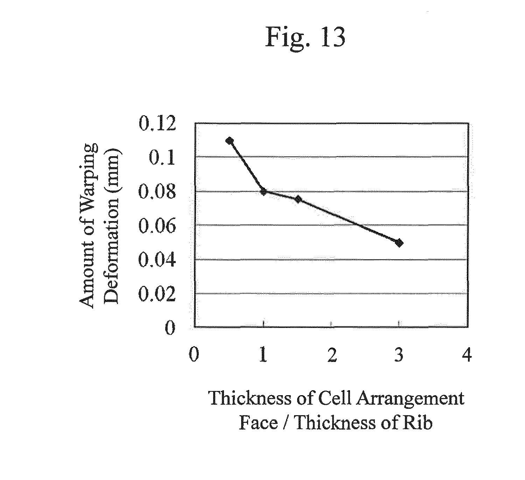

Fig. 13 shows the relationship between the "ratio of the thickness of the reaction cell arrangement face to the thickness of the rib" and the amount of warping deformation. As described above, providing a rib on the reaction cell arrangement face 4 can reduce the amount of warping deformation as compared to a case where no rib is provided. As shown in Fig. 13, it was found that the smaller the value of the "ratio of the thickness of the reaction cell arrangement face to the thickness of the rib" (i.e., the greater the thickness of the rib), the greater the amount of warping deformation. Herein, when the value of the "ratio of the thickness of the reaction cell arrangement face to the thickness of the rib" is small (i.e., when the thickness of the rib is large), the rigidity of the product can be improved, but the thickness of the coupling face 5 on which the rib is provided becomes locally large. Therefore, it is considered that the effect of an increase in warping deformation due to the locally increased thickness of the coupling face 5 has become greater than the effect of suppressing warping deformation with the increased rigidity of the product.

As described above, in order to reduce the amount of warping deformation to less than or equal to 0.1 mm, the "ratio of the thickness of the rib to the thickness of the reaction cell arrangement face" is desirably 1 or more.

Although a case has been described above where the rib 21 is provided on the surface of the entire outermost circumferential end portion of the reaction cell arrangement face 4, the present invention is not limited to such rib shape, and the effect of suppressing warping deformation with the increased rigidity can be obtained as long as the rib 21 is provided on at least part of the front surface or the rear surface of the reaction cell arrangement face 4, for example, by providing the rib 21 on the rear surface of the entire outermost circumferential end portion of the reaction cell arrangement face 4. In addition, the rib provided on the cell arrangement face shown in Figs. 12A and 12B has an effect of suppressing warping deformation with the increased rigidity even when part of the rib is disconnected.

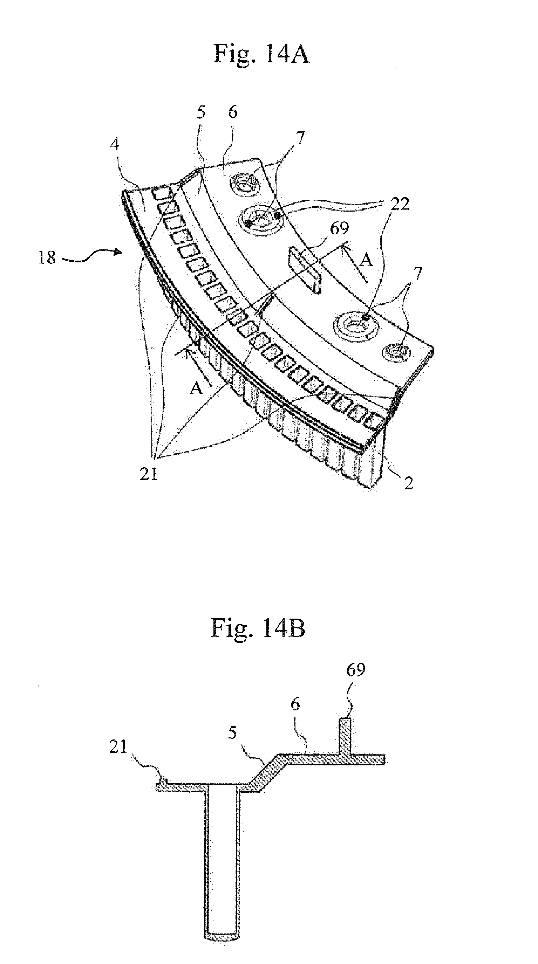

An examination was conducted by providing ribs 21 on both the coupling face 5 and the reaction cell arrangement face 4 with the shape 2 shown in Table 1. Fig. 14A is a perspective view showing the reaction cell block in this embodiment and Fig. 14B is a cross-sectional view thereof along A-A.

As shown in Figs. 14A and 14B, an examination was conducted by providing three ribs 21 each with a height of 0.5 mm and a thickness of 1 mm on the coupling face 5, providing a rib 21 with a height of 0.5 mm on the entire outer circumferential end portion of the reaction cell arrangement face 4, and changing the thickness of the rib on the reaction cell arrangement face 4. The reaction cell block in this embodiment corresponds to a combination of the embodiment shown in Fig. 7 and the embodiments shown in Figs. 12A and 12B.

Fig. 15 shows the relationship between the "the ratio of the thickness of the reaction cell arrangement face to the thickness of the rib on the reaction cell arrangement face" and the amount of warping deformation. As shown in Fig. 15, it was found that providing the ribs 21 on both the coupling face 5 and the reaction cell arrangement face 4 was able to suppress the amount of warping deformation to the minimum.

Although the embodiment described herein is an example in which three ribs 21 are provided on the coupling face 5 and a single rib 21 is provided on the entire outer circumferential end portion of the reaction cell arrangement face 4, the present invention is not limited thereto, and it is acceptable as long as ribs are provided on at least both the coupling face 5 and the reaction cell arrangement face 4. In this case, the ribs 21 on the coupling face 5 are desirably formed such that they extend in the radial direction across opposite ends of the coupling face, and the rib 21 on the reaction cell arrangement face 4 is desirably provided on the outer circumferential end portion. In addition, the longitudinal direction of the rib on the reaction cell arrangement face and the longitudinal direction of each rib on the coupling face 5 are desirably orthogonal to each other.

Resin molded products typically have dimensional variations. Thus, applying the rib shapes described with reference to Figs. 7 to 15 to the shapes of 2 ≤ H1/H2 ≤ 3.8 and 2 ≤ L1/L2 ≤ 7.4 shown in Figs. 4 and 6 can further reduce the amount of warping deformation.

The rib shapes shown above are obtained through separation from injection molding dies. Thus, draft may be formed, and in that case, the thickness of the rib shown in each of the abscissa axis of Figs. 8, 13, and 15 may be the average value between the thicknesses of the base and the tip end of the rib.

Ribs are not provided in a region between reaction cells on the surface of the reaction cell arrangement face 4. This is because it will take time to clean a region around the reaction cells from which a cause of contamination should be removed.

Although the result of examination conducted for a case where polycarbonate resin is used has been described above, the present invention is not limited thereto, and even when amorphous resin such as cycloolefin resin or acrylic resin is used, a large degree of shrinkage of the resin, which would otherwise occur due to crystallization of the resin, will not occur. Thus, as the tendency of warping deformation is equal to that of the result of the present examination, the present invention can be applied.

Fig. 16 is a view showing an exemplary configuration of an automatic analysis device in accordance with the present invention. Next, the fundamental operation thereof will be described. A sample storage unit 30 has one or more sample containers 54 arranged thereon. Although an example of a sample disc mechanism mounted on a disc-shaped mechanism unit is described herein, an alternative configuration of the sample storage unit may be a configuration of a sample rack or a sample holder that is commonly used for automatic analysis devices. In addition, a sample as referred to herein means a solution to be tested, which is used for reaction in a reaction container, and may be a collected sample stock solution, or a solution that has been obtained by processing the collected sample stock solution through dilution, pretreatment, or the like.

A sample in the sample container 54 is suctioned by a sample nozzle 56 of a sample supplying dispensing mechanism 31, and is then injected into a predetermined reaction container. A reagent disc mechanism 34 has a number of reagent containers 35. In addition, the reagent disc mechanism 34 has a reagent supplying dispensing mechanism 36 arranged thereon. A reagent is suctioned by a reagent nozzle 57 of the mechanism 36, and is then injected into a predetermined reaction cell. Reference numeral 39 denotes a spectrophotometer and reference numeral 55 denotes a light source with a light-collecting filter. A reaction disc 32 for storing a solution to be tested is disposed between the spectrophotometer 39 and the light source 55 with the light-collecting filter. Reaction cells 2 forming the reaction cell block 18 are arranged on the outer circumference of the reaction disc 32. Herein, when a reaction cell block 18 with a reduced amount of warping deformation of the sealed portions 1 of the reaction cells is used, it is possible to, even when the amount of a solution to be tested is small, allow light to pass through the solution to be tested in all of the reaction cells 22, and thus allow an analysis to be performed.

The whole reaction disc 32 is held at a predetermined temperature by a thermostatic bath 38. Reference numeral 40 denotes a reaction cell washing mechanism, and a detergent is supplied from a detergent container 42. Reference numeral 48 denotes a computer, reference numeral 52 denotes an interface, reference numeral 47 denotes a Log converter and an A/D converter, reference numeral 46 denotes a pipette for reagent, reference numeral 45 denotes a washing water pump, and reference numeral 44 denotes a sample pipette. In addition, reference numeral 49 denotes a printer, reference numeral 50 denotes a CRT, reference numeral 51 denotes a floppy disk or a hard disk as a storage device, and reference numeral 53 denotes an operation panel. The sample disc mechanism, the reagent disc mechanism, and the reaction disc are controlled and driven by driving units 229, 230, and 231, respectively, via interfaces. Each unit of the automatic analysis device is controlled by a computer via an interface.

In the aforementioned configuration, an operator enters analysis request information using the operation panel 53. The analysis request information entered by the operator is stored in memory in the microcomputer 48. A sample that has been put into the sample container 54 and set at a predetermined position of the sample disc mechanism 30 is dispensed in a predetermined amount into a reaction cell by the sample pipette 44 and the sample nozzle 56 of the sample supplying dispensing mechanism 31 in accordance with the analysis request information stored in the memory in the microcomputer 48. After that, the sample nozzle 56 is washed with water. A predetermined amount of reagent is dispensed into the reaction cell 2 by the reagent nozzle 57 of the reagent supplying dispensing mechanism 36. The reagent nozzle 57 dispenses a reagent to a next reaction cell after being washed with water. A mixed solution of the sample and the reagent is agitated by an agitation bar 58 of an agitation mechanism 37 or an ultrasonic element. The agitation mechanism 37 sequentially agitates a mixed solution in the next reaction cell.

The reaction cell 2 is held at a constant temperature by the thermostatic bath 38, and combines the functions of a reaction container and a photometric container. In the reaction process, light is supplied from the light source 55 with the light-collecting filter, and the solution to be tested in the reaction cell is measured by the spectrophotometer 39 at regular time intervals. The absorbance of the mixed solution is measured using a single or a plurality of set wavelengths.

The measured absorbance is captured by the computer 48 via the Log converter and the A/D converter 47 and the interface 52. The captured absorbance is converted into a concentration value, and the concentration value is stored in a floppy disk or a hard disk 51 or is output to a printer 49. Further, the test data can also be displayed on a CRT 50. The reaction cell 2 for which the measurement has finished is washed with water by the reaction container washing mechanism (i.e., a nozzle arm) 40. The reaction cell that has been washed is, after the water in the cell is suctioned by the suction nozzle 41, sequentially used for the next analysis.

Fig. 17 is a view of an area around a spectrophotometer that shows a cross section of Fig. 1A along A-A, in a state in which the reaction cell block 18 is installed on an automatic analysis device. Shown herein is an example in which a condenser lens is used as the light-collecting filter. Herein, the reaction cell block 18 is fixed on the reaction disc 32 with a screw 70, and a solution 68 to be tested in the reaction cell 2 is held at a constant temperature in an immersion region 66 of the thermostatic bath 38. A light beam output from a light source 61 travels in the direction of an arrow 67, and is condensed by a condenser lens 63, whereby a beam divergence 64 is narrowed. Such a beam passes through a photometric region 65 in the solution 68 to be tested in the reaction cell 2 that is disposed in the immersion region 66 of the thermostatic bath 38, and is then measured by the spectrophotometer 39.

Herein, when the reaction cell block 18 with a reduced amount of warping deformation of the sealed portions 1 of the reaction cells is used, it is possible to, even when the amount of the solution 68 to be tested is small, allow light to pass through the solution 68 to be tested in all of the reaction cells 2, and thus allow an analysis to be performed. In addition, according to the present invention, it is also possible to contribute to a reduction in the assembly cost of the reaction cells as well as reductions in the amounts of a sample and a reagent, which in turn contributes to a reduction in the running cost of the automatic analysis device.

It should be noted that the present invention is not limited to the aforementioned embodiments, and includes various variations. For example, although the aforementioned embodiments have been described in detail to clearly illustrate the present invention, the present invention need not include all of the structures described in the embodiments. It is possible to replace a part of a structure of an embodiment with a structure of another embodiment. In addition, it is also possible to add, to a structure of an embodiment, a structure of another embodiment. Further, it is also possible to, for a part of a structure of each embodiment, add/remove/substitute a structure of another embodiment.

### Reference Signs List

- 1: Sealed portion
- 2: Reaction cell
- 3: Open portion
- 4: Reaction cell arrangement face
- 5: Coupling face
- 6: Flange face
- 7: Screw mounting hole
- 12: Die
- 13: Molten resin material
- 15: Runner
- 16: Gate
- 18: Reaction cell block
- 19: Space portion of product
- 20: Amount of warping deformation of sealed portions of reaction cells
- 21: Rib
- 32: Reaction disc
- 35: Reaction container
- 38: Thermostatic bath
- 39: Spectrophotometer
- 61: Light source
- 63: Condenser lens
- 65: Photometric region
- 68: Solution to be tested
- 69: Handle
- 70: Screw

## Claims

1. A reaction cell block for an analysis device, comprising:
a plurality of reaction cells each having a sealed portion at one end and an open portion at the other end;
a reaction cell arrangement face obtained by arranging the plurality of reaction cells on a circumference such that end faces of the reaction cells on the open portion side are flush;
a flange face provided on an inner side of a circle than the reaction cells, the flange face having a plurality of mount portions in a circumferential direction to be mounted on the analysis device; and
a coupling face that joins the reaction cell arrangement face and the flange face, wherein
the coupling face is connected to the reaction cell arrangement face and the flange face at an angle, so that the reaction cell arrangement face and the flange face form a stepped structure, and
at least one rib is provided on a front surface or a rear surface of the coupling face in a direction in a range of ±10° with respect to a direction that is orthogonal to an outer circumferential end portion of the reaction cell arrangement face.

2. The reaction cell block for an analysis device according to claim 1, wherein the rib is formed in a region from a boundary position between the flange face and the coupling face to a boundary position between the coupling face and the reaction cell arrangement face.

3. The reaction cell block for an analysis device according to claim 1, wherein three or more ribs are provided for every 45° in the circumferential direction.

4. The reaction cell block for an analysis device according to claim 1, wherein a ratio of a thickness of the coupling face to a thickness of the rib is 0.5 or more.

5. A reaction cell block for an analysis device, comprising:
a plurality of reaction cells each having a sealed portion at one end and an open portion at the other end;
a reaction cell arrangement face obtained by arranging the plurality of reaction cells on a circumference such that end faces of the reaction cells on the open portion side are flush;
a flange face provided on an inner side of a circle than the reaction cells, the flange face having a plurality of mount portions in a circumferential direction to be mounted on the analysis device; and
a coupling face that joins the reaction cell arrangement face and the flange face, wherein
the coupling face is connected to the reaction cell arrangement face and the flange face at an angle, so that the reaction cell arrangement face and the flange face form a stepped structure, and
at least one rib is provided on a front surface or a rear surface of the coupling face, and at least one rib is provided on a front surface or a rear surface of the reaction cell arrangement face.

6. The reaction cell block for an analysis device according to claim 5, wherein the rib on the coupling face is provided in a direction in a range of ±10° with respect to a direction that is orthogonal to an outer circumferential end portion of the reaction cell arrangement face.

7. A reaction cell block for an analysis device, comprising:
a plurality of reaction cells each having a sealed portion at one end and an open portion at the other end;
a reaction cell arrangement face obtained by arranging the plurality of reaction cells on a circumference such that end faces of the reaction cells on the open portion side are flush;
a flange face provided on an inner side of a circle than the reaction cells, the flange face having a plurality of mount portions in a circumferential direction to be mounted on the analysis device; and
a coupling face that joins the reaction cell arrangement face and the flange face, wherein
the coupling face is connected to the reaction cell arrangement face and the flange face at an angle, so that the reaction cell arrangement face and the flange face form a stepped structure, and
a rib is provided on at least part of a front surface or a rear surface of the reaction cell arrangement face.

8. The reaction cell block for an analysis device according to any one of claims 5 to 7, wherein a rib is provided on at least part of a front surface or a rear surface of an outermost circumferential end portion of the reaction cell arrangement face.

9. The reaction cell block for an analysis device according to any one of claims 5 to 7, wherein a rib is provided on a front surface or a rear surface of an entire outermost circumferential end portion of the reaction cell arrangement face.

10. The reaction cell block for an analysis device according to any one of claims 5 to 9, wherein a ratio of a thickness of the cell arrangement face to a thickness of the rib is 1 or more.

11. The reaction cell block for an analysis device according to any one of claims 1 to 10, wherein a ratio H1/H2 between a depth dimension H1 of each reaction cell and a dimension H2 of the coupling face that are measured in a direction orthogonal to the cell arrangement face is 3.8 or less.

12. The reaction cell block for an analysis device according to any one of claims 1 to 10, wherein a ratio L1/L2 between a dimension L1 of the reaction cell block in the entire radial direction and a dimension L2 of the coupling face in the radial direction that are measured in a direction parallel with the flange face is 7.4 or less.

13. The reaction cell block for an analysis device according to any one of claims 1 to 12, wherein the rib is not provided in a region between the plurality of reaction cells on the surface of the reaction cell arrangement face.
